# EUROPÄISCHE PATENTSCHRIFT

(11) **EP 2 872 279 B1**
(45) Veröffentlichungstag und Bekanntmachung des Hinweises auf die Patenterteilung: **24.08.2016**
(21) Anmeldenummer: 13729651.3
(22) Anmeldetag: 07.06.2013
(51) Int. Cl.: B23K 1/00, B23K 1/19, C04B 37/00, G01L 9/00

(54) **VERFAHREN ZUM FÜGEN VON KERAMIKKÖRPERN MITTELS EINES AKTIVHARTLOTS UNTER VERWENDUNG EINES LOTSTOPPS, BAUGRUPPE MIT MINDESTENS ZWEI MITEINANDER GEFÜGTEN KERAMIKKÖRPERN, INSBESONDERE DRUCKMESSZELLE**
METHOD FOR JOINING CERAMIC BODIES BY MEANS OF AN ACTIVE HARD SOLDER USING A SOLDER STOP, ASSEMBLY COMPRISING AT LEAST TWO JOINED CERAMIC BODIES, IN PARTICULAR PRESSURE MEASURING CELL
PROCÉDÉ D'ASSEMBLAGE DE CORPS CÉRAMIQUE À L'AIDE D'UN MÉTAL D'APPORT DE BRASAGE FORT AU MOYEN D'UNE ÉPARGNE DE SOUDAGE, ENSEMBLE DOTÉ D'AU MOINS DEUX CORPS CÉRAMIQUE ASSEMBLÉS, NOTAMMENT UNE CELLULE DE MESURE DE PRESSION

(30) Priorität: 11.07.2012 DE 102012106236
(43) Veröffentlichungstag der Anmeldung: 20.05.2015
(73) Patentinhaber: Endress+Hauser GmbH+Co. KG, 79689 Maulburg (DE)
(72) Erfinder: PONATH, Nils, 79539 Lörrach (DE); ROßBERG, Andreas, 79713 Bad Säckingen (DE); SCHMIDT, Elke, 79713 Bad Säckingen (DE)
(74) Vertreter: Andres, Angelika Maria
(86) Internationale Anmeldenummer: PCT/EP2013/061809
(87) Internationale Veröffentlichungsnummer: WO 2014/009070

(56) Entgegenhaltungen:
- EP-A1- 1 010 973
- US-A1- 2011 206 912

## Beschreibung

Die vorliegende Erfindung betrifft eine Baugruppe und ein Verfahren zum Anstellen einer Baugruppe gemäß dem Oberbegriff der Ansprüche 1 und 15 (siehe, z.B., EP 1 010 973 A).

Aufgrund der besonderen Relevanz der Erfindung für Druckmesszellen wird die Problemstellung der Erfindung zunächst anhand von Druckmesszellen erläutert.

Druckmesszellen nach dem Stand der Technik weisen eine keramische Messmembran und einen keramischen Gegenkörper auf, wobei die Messmembran mit dem Gegenkörper entlang einer umlaufenden Fügestelle, welche ein Aktivhartlot aufweist, druckdicht verbunden ist, wobei zwischen der Messmembran und dem Gegenkörper eine Druckkammer gebildet ist, wobei sich die Gleichgewichtslage der Messmembran aus der Differenz zwischen einem in der Druckkammer herrschenden Druck und einem auf die der Druckkammer abgewandten Außenseite der Messmembran einwirkenden Druck ergibt.

Als Material für den Gegenkörper und die Messmembran sind insbesondere Aluminiumoxidkeramiken im Einsatz, welche sich aufgrund ihrer elastischen Eigenschaften und ihrer Medienbeständigkeit zur Herstellung von Druckmesszellen eignen. Die genannten Keramikkomponenten werden insbesondere mit einem Aktivhartlot gefügt, welches bevorzugt ein Zr-Ni-Ti-haltiges Aktivhartlot ist. Die Herstellung eines solchen Aktivhartlots ist beispielsweise in der europäischen Offenlegungsschrift EP 0 490 807 A2 offenbart. Nach dem in der Offenlegungsschrift beschriebenen Verfahren lassen sich insbesondere Ringe aus dem Aktivhartlotmaterial herstellen, welche zwischen Messmembran und Gegenkörper zu positionieren sind, um diese miteinander zu verlöten.

Die Schmelze des Aktivhartlots neigt jedoch dazu, radial einwärts zu fließen. Es sind also weitere Maßnahmen erforderlich um das zu verhindern. Hierzu offenbart beispielsweise die Offenlegungsschrift DE 100 36 433 A1 eine kapazitive Druckmesszelle, die ebenfalls eine Fügestelle mit einem Aktivhartlot aufweist, wobei an der Fügestellenwurzel, also dem Innenradius der Fügestelle, eine ringförmig umlaufende Nut ausgebildet ist, die einerseits die Lokalisierung von Kerbspannungen an der Fügestelle verhindert und andererseits einen zuverlässigen Lotstopp definiert, über den das Aktivhartlot nicht weiter radial einwärts fließen kann.

Eine praktizierte Methode zum Begrenzen des radial einwärts fließenden Aktivhartlots besteht darin, eine membranseitige Elektrode, welche Tantal aufweist, und welche mit dem Aktivhartlot in galvanischen Kontakt gelangen soll, oberflächlich zu oxidieren. Bei vergleichbar sehr niedrigen Löttemperaturen kann damit ein Einlaufen des Aktivhartlots in die Druckkammer mit einer akzeptablen Ausbeute verhindert werden. Wenn jedoch die Löttemperatur erhöht wird, wirkt dieser Lötstopp nicht mehr zuverlässig, und das Lot fließt über den Rand der Tantalelektroden in die Druckkammer hinein.

In der noch unveröffentlichten Patentanmeldung DE 10 2012 103 166 ist eine Graphitschicht als Lotstopp offenbart.

Defekte in der Graphitschicht könnten jedoch die Benetzungsverhinderung ggf. beeinträchtigen. Es ist daher die Aufgabe der vorliegenden Erfindung, eine Baugruppe bzw. eine Druckmesszelle bereitzustellen, bei deren Herstellung ein Einfließen des Lots durch einen Lotstopp noch zuverlässiger verhindert wird.

Die Aufgabe wird erfindungsgemäß gelöst durch die Baugruppe gemäß dem unabhängigen Patentanspruch 1, die Druckmesszelle gemäß dem abhängigen Patentanspruch 12 und das Verfahren gemäß dem unabhängigen Patentanspruch 15.

Die erfindungsgemäße Baugruppe umfasst einen ersten Keramikkörper und einen zweiten Keramikkörper, wobei der erste Keramikkörper und der zweite Keramikkörper mittels einer Fügestelle verbunden sind, wobei die Fügestelle ein Aktivhartlot aufweist, wobei das Aktivhartlot, gemittelt über ein zusammenhängendes Hauptvolumen, das mindestens 50%, insbesondere mindestens 70% und bevorzugt mindestens 80 % des Volumens der Fügestelle umfasst, eine mittlere Komposition C_{H} mit einer Liquidustemperatur Tₗ(C_{H}) aufweist, wobei C_{H} := (c_{H1}, ... , c_{HN}), wobei |C_{H}| = 1, und wobei die c_{Hi} der stöchiometrische Anteil der Komponenten Kᵢi = 1, ..., N der mittleren Komposition des Aktivhartlots im Hauptvolumen ist, wobei erfindungsgemäß ein Randbereich der Fügestelle, der mindestens einen der Keramikkörper berührt, und der mit dem Hauptvolumen nicht mehr als 8% des Hauptvolumens, beispielsweise nicht mehr als 4% und insbesondere nicht mehr als 2% des Hauptvolumens überlappt und bevorzugt außerhalb des Hauptvolumens liegt, eine mittlere Komposition C_{R} mit einer Liquidustemperatur Tₗ(C_{R}) aufweist, die nicht weniger als 20 K, vorzugsweise nicht weniger als 50 K, und besonders bevorzugt nicht weniger als 100 K über der Liquidustemperatur Tₗ(C_{H}) der mittleren Komposition C_{H} des Hauptvolumens liegt, wobei C_{R} := (c_{Ri}, ... ,c_{RN}), wobei |C_{R}| = 1, und wobei die c_{Ri} der stöchiometrische Anteil der Komponenten Kᵢi = 1, ..., N der mittleren Komposition des Aktivhartlots im Randbereich ist.

In einer Weiterbildung der Erfindung weist der Randbereich mit der mittleren Komposition C_{R} ein Volumen auf, das nicht weniger als 0,1 % beispielsweise nicht weniger als 0,5% und insbesondere nicht weniger als 1 % des Volumens der Fügestelle beträgt.

In einer Weiterbildung der Erfindung ist die Fügestelle ringförmig ausgebildet, wobei das Hauptvolumen durch einen Rotationskörper definiert ist, der durch Rotation eines konvexen Polygons, insbesondere Rechtecks, um die Hauptrotationsachse des Rings gebildet ist.

In einer Weiterbildung der Erfindung verläuft der Randbereich mit Komposition C_{R} entlang des inneren Randes der ringförmigen Fügestelle.

In einer Weiterbildung der Erfindung steigt die Liquidustemperatur von Tₗ(C_{H}) zur Liquidustemperatur Tₗ(C_{R}) monoton mit der Veränderung der Komposition von C_{H} zu C_{R} an.

In einer Weiterbildung der Erfindung weist die Komposition C_{H} eine Liquidustemperatur Tₗ(C_{H}) auf, die nicht mehr als 300 K , vorzugsweise nicht mehr als 150 K, und bevorzugt nicht mehr als 50 K oberhalb der Liquidustemperatur Tₗ(Cₑ) des eutektischen Punktes bzw. des nächsten Schnittpunks mit einer eutektischen Rinne mit einer Komposition Cₑ im Kompositionsraum liegt, wobei Cₑ := (cₑ₁, ... , c_{eN}), wobei |Cₑ| = 1, und wobei die cₑᵢ der stöchiometrische Anteil der Komponenten Kᵢ mit i = 1, ..., N am eutektischen Punkt bzw. ein nächster Schnittpunkt mit einer eutektischen Rinne ist.

Der nächste Schnittpunkt mit einer eutektischen Rinne ist definiert durch einen Punkt in einer eutektischen Rinne, für dessen Komposition Cₑ gilt, dass der Betrag des Differenzvektors |Cₑ-C_{H}| ein Minimum unter allen Punkten in eutektischen Rinnen aufweist.

In einer Weiterbildung der Erfindung weist die Legierung der Fügestelle am eutektischen Punkt bzw. am nächsten Schnittpunkt mit einer eutektischen Rinne im Kompositionsraum eine Komposition Cₑ auf, wobei Cₑ := (cₑ₁, ... , c_{eN}), wobei |Cₑ| = 1, wobei die cₑᵢ der stöchiometrische Anteil der Komponenten Kᵢ mit i = 1, ..., N am eutektischen Punkt bzw. am nächsten Schnittpunkt mit einer eutektischen Rinne ist, wobei die Differenz zwischen der Komposition Cₑ und der Komposition C_{H} mit einem normierten Differenzvektor D_{eH} beschreibbar ist, wobei gilt: Cₑ = C_{H} + a_{eH} * D_{eH}, mit |D_{eH}|=1, wobei die Differenz zwischen der Komposition C_{R} und der Komposition C_{H} mit einem normierten Differenzvektor D_{RH} beschreibbar ist, wobei gilt: C_{R} = C_{H} + a_{RH} * D_{RH}, mit |D_{RH}|=1, wobei a_{eH} und a_{RH} positive Skalare sind, wobei für das Skalarprodukt s_{eR} : = D_{eH} · D_{RH} gilt: s_{eR} < 0, insbesondere s_{eR} < -0,5, bevorzugt s_{eR} < -0,8.

Gemäß einer Weiterbildung der Erfindung weisen bzw. weist der erste Keramikkörper und / oder der zweite Keramikkörper Al₂O₃ auf.

Gemäß einer Weiterbildung der Erfindung enthält das Aktivhartlot Zr, Ni und Ti, wobei in einer Ausgestaltung der Erfindung zumindest im Hauptvolumen aus diesen Komponenten und ggf. Aluminium besteht, welches durch den Lotprozess aus der Keramik in die Fügestelle eindiffundiert ist.

In einer Ausgestaltung dieser Weiterbildung der Erfindung weist die Komposition C_{H}, 20 Atom-% bis 24 Atom-% Ni, 13 Atom-% bis 17 Atom % Ti und als Rest zu 100% Zr sowie ggf. Aluminium aufweist, welches durch den Lotprozess aus der Keramik in die Fügestelle eindiffundiert ist,
, wobei die Komposition C_{H} insbesondere 63 Atom-% Zr, 22 Atom-% Ni und 15 Atom-% Ti aufweist, wobei ggf. Al einduffundiert ist, wobei in dem Maße, wie Al vorliegt, insbesondere der Titananteil reduziert ist, und wobei die Komposition C_{R} gegenüber der Komposition C_{H} einen erhöhten Ni-Anteil aufweist.

In einer Weiterbildung der Erfindung enthält die Komposition C_{R} des Randbereichs die gleichen Metalle wie die Komposition C_{H} des Hauptvolumens. In einer Ausgestaltung dieser Weiterbildung der Erfindung enthält die Komposition abgesehen von ggf. vorhandenen Verunreinigungen keine weiteren Elemente. In einer anderen Weiterbildung der Erfindung enthält die Komposition des Randbereichs mindestens ein weiteres Metall, welches ausgewählt ist aus einer Liste, welche Cu, Fe, Al, Ag und Au umfasst.

Die erfindungsgemäße Druckmesszelle umfasst eine erfindungsgemäße Baugruppe, wobei der erste Keramikkörper einen Membrankörper einer Messmembran der Druckmesszelle bildet, und wobei der zweite Keramikkörper einen Gegenkörper der Druckmesszelle bildet, wobei der Gegenkörper und der Messmembran mittels der Fügestelle, welche ringförmig ausgebildet ist, druckdicht miteinander gefügt sind.

In einer Weiterbildung weist die Druckmesszelle einen kapazitiven Wandler auf, wobei eine Oberfläche des Gegenkörpers, die der Messmembran zugewandt ist, und/oder die Oberfläche der Messmembran, die dem Gegenkörper zugewandt ist, eine metallische Elektrode aufweisen bzw. aufweist, wobei die Elektrode bzw. Elektroden ein Metall aufweist bzw. aufweisen, welches in der Komposition C_{R} im Vergleich zur Komposition C_{H} angereichert ist. In einer Weiterbildung der Erfindung umfasst dieses Metall Nickel.

Das erfindungsgemäße Verfahren zum Herstellen einer Baugruppe, welche einen ersten Keramikkörper und einen zweiten Keramikkörper aufweist, wobei der erste Keramikkörper und der zweite Keramikkörper durch das Verfahren mittels eines Aktivhartlots zu verbinden sind, ist ein Verfahren, welches die folgenden Schritte umfasst: Bereitstellen des Aktivhartlots und eines Lotstopps zwischen den Keramikkörpern, wobei das Aktivhartlot vor dem Löten gemittelt über ein zusammenhängendes Hauptvolumen, das mindestens 50%, insbesondere mindestens 70% und bevorzugt mindestens 80% des Volumens des Aktivhartlot umfasst, eine mittlere Komposition C_{H0} mit einer Liquidustemperatur Tₗ(C_{H0}) aufweist, wobei C_{H0} := (c_{H01}, ..., c_{H0N}), wobei |C_{H0}| = 1, und wobei die c_{H0i} der stöchiometrische Anteil der Komponenten Kᵢi = 1, ..., N der mittleren Komposition des Aktivhartlots im Hauptvolumen ist, wobei der Lotstopp mindestens ein Material aufweist, dessen Liquidustemperatur oberhalb der Liquidustemperatur der Komposition C_{H0} des Hauptvolumens liegt, und wobei eine Mischung des Materials des Lotstopps mit der Komposition C_{H0} zumindest im Randbereich einer durch das Verfahren zu bildenden Fügestelle zur Bildung einer mittlere Komposition C_{R} führt, wobei die Komposition C_{R} eine Liquidustemperatur Tₗ(C_{R}) aufweist, die nicht weniger als 20 K, vorzugsweise nicht weniger als 50 K, und besonders bevorzugt nicht weniger als 100 K über der Liquidustemperatur Tₗ(C_{H0}) der mittleren Komposition C_{H0} des Hauptvolumens liegt, wobei C_{R} := (c_{R1}, ... ,c_{RN}), wobei |C_{R}| = 1, und wobei die c_{Ri} der stöchiometrische Anteil der Komponenten Kᵢi = 1, ..., N der mittleren Komposition des Aktivhartlots im Randbereich ist; und Erhitzen der Keramikkörper des Aktivhartlots und des Lotstopps in einem Vakuumlötprozess, zumindest bis zum Schmelzen der Komposition C_{H}, wobei die Schmelze sich im Randbereich des Aktivhartlots mit dem Material des Lotstopps vermischt, wodurch die Schmelze im Randbereich isotherm erstarrt oder höherviskos wird und stoppt. Stoppen bedeutet in diesem Zusammenhang, dass ein Fließen des Aktivhartlots, sofern es vorgekommen ist, im Randbereich zum Stillstand kommt.

In einer Weiterbildung des Verfahrens weist das Aktivhartlot Zr, Ni und Ti auf.

In einer Weiterbildung der Erfindung weist die Komposition C_{H0}, des Aktivhartlots vor dem Fügen 20 Atom-% bis 24 Atom-% Ni, 13 Atom-% bis 17 Atom % Ti und als Rest zu 100% Zr auf, wobei die Komposition C_{H} insbesondere 63 Atom-% Zr, 22 Atom-% Ni und 15 Atom-% Ti aufweist.

In einer Weiterbildung der Erfindung weist die Komposition C_{R} gegenüber der Komposition C_{H}, also des Hauptvolumens der Fügestelle nach dem Fügen einen erhöhten Ni-Anteil auf.

In einer Weiterbildung der Erfindung wird der Lotstopp bereitgestellt, in dem ein Metall oder eine Mischung verschiedener Metalle auf mindestens einem Oberflächenabschnitt mindestens eines Keramikkörpers abgeschieden werden, wobei eine Anreicherung des Metalls oder der Mischung von Metallen im Aktivhartlot zu einer erhöhten Liquidustemperatur gegenüber der Liquidustemperatur der Komposition des Hauptvolumens des Aktivhartlots führt.

In einer Weiterbildung der Erfindung enthält das abgeschiedene Metall bzw. die Mischung von abgeschiedenen Metallen Nickel.

Gemäß einer Weiterbildung der Erfindung überlappt der Oberflächenabschnitt des Keramikkörpers, in dem der Lotstopp bereitgestellt wird, nicht mehr als 25%, vorzugsweise nicht mehr als 10% der Kontaktfläche zwischen der Fügestelle und dem Keramikkörper, mit Kontaktfläche zwischen der Fügestelle und dem Keramikkörper.

Die Erfindung wird nun anhand des in den Zeichnungen dargestellten Ausführungsbeispiels erläutert.
- Fig. 1:: einen Schnitt durch ein exemplarisches Mischungsdiagramm für eine binäre Legierung;
- Fig. 2:: einen Längsschnitt durch eine erfindungsgemäße Druckmesszelle;
- Fig. 3a:: eine Kompositionsverteilung C(r) vor dem Aufschmelzen der Legierung des Aktivhartlots; und
- Fig. 3b:: eine Kompositionsverteilung C(r) nach dem Fügeprozess.

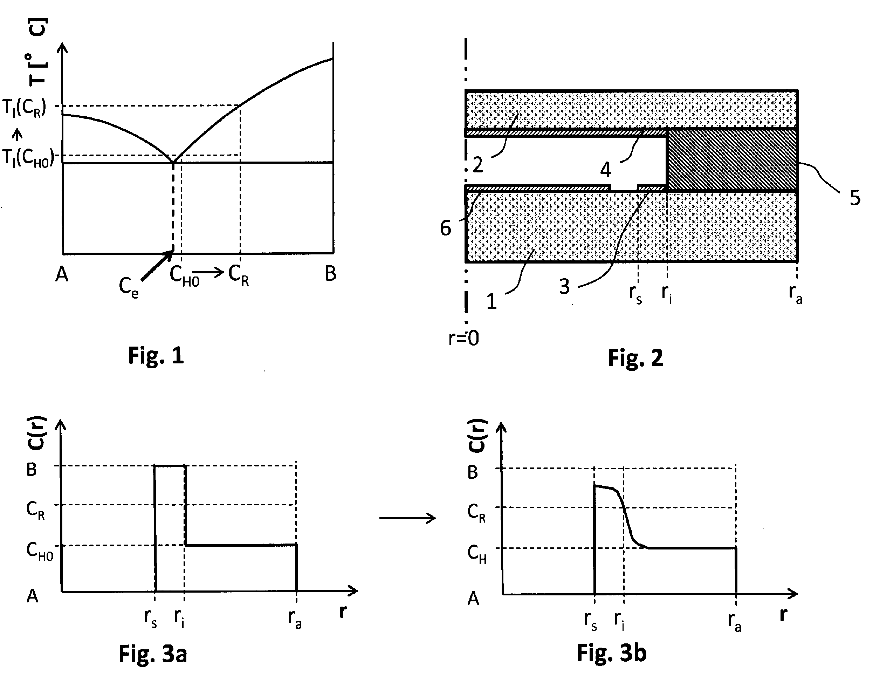

Wie in Fig. 1 dargestellt, weist eine Legierung, die aus einer Mischung zweier Metalle oder zweier Teillegierungen A und B besteht, einen eutektischen Punkt bzw. einen Schnittpunkt mit einer eutektischen Rinne mit einer Komposition Cₑ auf. Nahe dieser Komposition Cₑ ist eine Komposition C_{H0} mit einem gegenüber Cₑ etwas erhöhten Anteil einer Komponente B gegeben, die gegenüber der Komposition Cₑ eine nur geringfügig erhöhte Liquidustemperatur aufweist. Eine weitere Anreicherung der Komponente B führt zu einer deutlich erhöhten Liquidustemperatur, wie beispielsweise für eine Komposition C_{R} dargestellt ist.

Ausgehend von dieser Überlegung werden nun die Komponenten einer Druckmesszelle gefügt, deren Anordnung vor dem Fügen in Fig. 2 dargestellt sind. Die Druckmesszelle umfasst einen keramischen Gegenkörper 1 und eine Messmembran 2, die Aluminiumoxid aufweisen. Die Messmembran 2 und der Gegenkörper sind mittels eines Aktivhartlots zu fügen. Um das Aktivhartlots in einem definierten Bereich zu halten, wird auf einer der Messmembran 2 zugewandten Oberfläche des Gegenkörpers 1 ein ringförmiger Lötstopp 3 abgeschieden, beispielsweise durch Sputtern, der beispielsweise eine radiale rᵢ - rₛ von etwa 0,5 mm aufweist. Die Schichtdicke des Lotstopps beträgt beispielsweise etwa 0,1 µm bis 0,5 µm. Der Lötstopp kann insbesondere Nickel umfassen. Ein entsprechender Lötstopp 4 wird auf einer dem Gegenkörper 1 zugewandten Oberfläche der Messmembran 2 abgeschieden, wobei der membranseitige Lötstopp 4 an der Messmembran 2 insbesondere als vollflächige Kreisschreibe gebildet sein kann, um damit zugleich als membranseitige Elektrode eines kapazitiven Wandlers zu dienen. Auch der membranseitige Lötstopp 4 kann Nickel in einer Stärke von beispielsweise 0,1 µm bis 0,5 µm umfassen.

Bei der Präparation des Lötstopps 3 am Gegenkörper kann zugleich mindestens eine gegenkörperseitige Messelektrode 6 des kapazitiven Wandlers abgeschieden werden, welche insbesondere das gleiche Material wie der Lötstopp 4 aufweist. Die gegenkörperseitige Messelektrode 6 sollte aber von dem gegenkörperseitigen Lötstopp 4 galvanisch getrennt sein.

Zur Vorbereitung der Verbindung wird dann zwischen dem Gegenkörper und der Messmembran ein Aktivhartlotring 5 bereitgestellt, der sich von rᵢ bis rₐ erstreckt. Der Ring umfasst beispielsweise ein ternäres Zr-Ni-Ti- Aktivhartlot mit einer Komposition C_{H0} von insbesondere 63 Atom-% Zr, 22 Atom-% Ni und 15 Atom-% Ti aufweist. Dieses Lot weist eine Liquidustemperatur Tₗ(C_{H0}) von etwa 870 °C auf. In Analogie zu Fig. 1 wäre nun die Teilkomposition von Zr und Ti als Komponente A zu bezeichnen, während Ni als Komponente B zu bezeichnen wäre. Der radiale Verlauf der Komposition C(r) der metallischen Komponenten an der Oberfläche des Gegenkörpers vor dem Aufschmelzen des Aktivhartlots ist in Fig. 3a dargestellt. Im Bereich des Lotstopps aus Ni liegt demnach ausschließlich die Komponente B vor, während im Bereich des Aktivhartlotrings eine Mischung aus A und B in der Komposition C_{H0} vorliegt. Nach Erhitzen der Anordnung aus Fig. 2 in einem Hochvakuumlötprozess auf eine Löttemperatur von etwa 890 °C schmilzt der Aktivhartlotring 5, und seine aktive Komponente Ti reagiert mit dem Keramikmaterial der Messmembran und des Gegenkörpers. Gleichzeitig gelangt an der Grenzfläche zwischen dem Aktivhartlot und dem Lötstopp das Nickel des Lötstopps in die Schmelze, wobei durch die lokale Anreicherung von Nickel eine Komposition C_{R} im Randbereich entsteht, deren Liquidustemperatur Tₗ(C_{R}) oberhalb der aktuellen Löttemperatur liegt. Damit erstarrt die Schmelze im Randbereich, wodurch ein weiteres Einfließen des Aktivhartlots zuverlässig verhindert wird. Tatsächlich kann durch den Lötprozess sowohl in das Hauptvolumen als auch in den Randbereich Aluminium aus der Keramik eindiffundieren, während Titan aus dem Aktivhartlot in die Keramik diffundiert, so dass die die Komposition Cᵣdes Randbereichs neben den Metallen des Lotstopps und des Aktivhartlots weiterhin Al enthalten kann, wobei die Komposition C_{H} des Hauptvolumens nach dem Löten neben den Elementen in der Komposition C_{H0} des Aktivhartlots vor dem Löten weiterhin Aluminium enthalten kann.

## Patentansprüche

1. Baugruppe, umfassend:
einen ersten Keramikkörper (1) und einen zweiten Keramikkörper (2), wobei der erste Keramikkörper (1) und der zweite Keramikkörper (2) mittels einer Fügestelle verbunden sind, wobei die Fügestelle ein Aktivhartlot (5) aufweist,
wobei das Aktivhartlot, gemittelt über ein zusammenhängendes Hauptvolumen, das mindestens 50%, insbesondere mindestens 70% und bevorzugt mindestens 80 % des Volumens der Fügestelle umfasst, eine mittlere Komposition C_{H} mit einer Liquidustemperatur Tₗ(C_{H}) aufweist,
wobei C_{H} := (c_{H1}, ... ,c_{HN}), wobei |C_{H}| = 1, und wobei die c_{Hi} der stöchiometrische Anteil der Komponenten Kᵢi = 1, ..., N der mittleren Komposition des Aktivhartlots im Hauptvolumen ist,
**dadurch gekennzeichnet, dass** ein Randbereich der Fügestelle, der mindestens einen der Keramikkörper berührt und der mit dem Hauptvolumen nicht mehr als 8% des Hauptvolumens, beispielsweise nicht mehr als 4% und insbesondere nicht mehr als 2% des Hauptvolumens überlappt und bevorzugt außerhalb des Hauptvolumens liegt, eine mittlere Komposition C_{R} mit einer Liquidustemperatur Tₗ(C_{R}) aufweist, die nicht weniger als 20 K, vorzugsweise nicht weniger als 50 K, und besonders bevorzugt nicht weniger als 100 K über der Liquidustemperatur Tₗ(C_{H}) der mittleren Komposition C_{H} des Hauptvolumens liegt,
wobei C_{R} := (c_{R1}, ... ,c_{RN}), wobei |C_{R}| = 1, und wobei die c_{Ri} der stöchiometrische Anteil der Komponenten Kᵢi = 1, ..., N der mittleren Komposition des Aktivhartlots im Randbereich ist.

2. Baugruppe nach Anspruch 1, wobei die der Randbereich mit der mittleren Komposition C_{R} ein Volumen aufweist, das nicht weniger als 0,1 % beispielsweise nicht weniger als 0,5% und insbesondere nicht weniger als 1% des Volumens der Fügestelle beträgt.

3. Baugruppe nach Anspruch 1 oder 2, wobei die Fügestelle ringförmig ausgebildet ist, und wobei das Hauptvolumen durch einen Rotationskörper definiert ist, der durch Rotation eines konvexen Polygons, insbesondere Rechtecks, um die Hauptrotationsachse des Rings gebildet ist.

4. Baugruppe nach Anspruch 3, wobei der Randbereich mit Komposition C_{R} entlang des inneren Randes der ringförmigen Fügestelle verläuft.

5. Baugruppe nach einem der vorhergehenden Ansprüche, wobei die Liquidustemperatur von Tₗ(C_{H}) zur Liquidustemperatur Tₗ(C_{R}) monoton mit der Veränderung der Komposition von C_{H} zu C_{R} ansteigt.

6. Baugruppe nach einem der vorherigen Ansprüche, wobei die Komposition C_{H} eine Liquidustemperatur Tₗ(C_{H}) aufweist, die nicht mehr als 300 K , vorzugsweise nicht mehr als 150 K, und bevorzugt nicht mehr als 50 K oberhalb der Liquidustemperatur Tₗ(Cₑ) des eutektischen Punktes bzw. des nächsten Schnittpunks mit einer eutektischen Rinne mit einer Komposition Cₑ im Kompositionsraum liegt,
wobei Cₑ := (cₑ₁, ... ,c_{eN}), wobei |Cₑ| = 1, und wobei die cₑᵢ der stöchiometrische Anteil der Komponenten Kᵢ mit i = 1, ..., N am eutektischen Punkt bzw. ein nächster Schnittpunkt mit einer eutektischen Rinne ist.

7. Baugruppe nach einem der vorhergehenden Ansprüche, wobei die Legierung der Fügestelle am eutektischen Punkt bzw. am nächsten Schnittpunkt mit einer eutektischen Rinne im Kompositionsraum eine Komposition Cₑ aufweist,
wobei Cₑ := (cₑ₁, ... ,c_{eN}), wobei |Cₑ| = 1, wobei die cₑᵢ der stöchiometrische Anteil der Komponenten Kᵢ mit i = 1, ..., N am eutektischen Punkt bzw. am nächsten Schnittpunkt mit einer eutektischen Rinne ist,
wobei die Differenz zwischen der Komposition Cₑ und der Komposition C_{H} mit einem normierten Differenzvektor D_{eH} beschreibbar ist,
wobei gilt: Cₑ = C_{H} + a_{eH} * D_{eH}, mit |D_{eH}|=1,
wobei die Differenz zwischen der Komposition C_{R} und der Komposition C_{H} mit einem normierten Differenzvektor D_{RH} beschreibbar ist,
wobei gilt: C_{R} = C_{H} + a_{RH} * D_{RH}, mit |D_{RH}|=1,
wobei a_{eH} und a_{RH} positive Skalare sind,
wobei für das Skalarprodukt s_{eR} : = D_{eH} · D_{RH} gilt:
s_{eR} < 0, insbesondere s_{eR} < -0,5, bevorzugt s_{eR} < - 0,8.

8. Baugruppe nach einem der vorhergehenden Ansprüche, wobei die Komposition C_{R} des Randbereichs die gleichen Metalle wie die Komposition C_{H} des Hauptvolumens oder weitere Metalle enthält.

9. Baugruppe nach einem der vorhergehenden Ansprüche, wobei der erste Keramikkörper (1) und / oder der zweite Keramikkörper (2) Al₂O₃ aufweisen.

10. Baugruppe nach einem der vorhergehenden Ansprüche, wobei das Aktivhartlot Zr, Ni und Ti aufweist.

11. Baugruppe nach dem vorhergehenden Anspruch, wobei die Komposition C_{H}, 20 Atom-% bis 24 Atom-% Ni, 13 Atom-% bis 17 Atom % Ti und als Rest zu 100% Zr sowie ggf. Aluminium aufweist, welches durch den Lotprozess aus der Keramik in die Fügestelle eindiffundiert ist, wobei die Komposition C_{H} insbesondere 63 Atom-% Zr, 22 Atom-% Ni und 15 Atom-% Ti aufweist, wobei ggf. Al einduffundiert ist ,wobei in dem Maße, wie Al vorliegt, insbesondere der Titananteil reduziert ist,und wobei die Komposition C_{R} gegenüber der Komposition C_{H} einen erhöhten Ni-Anteil aufweist.

12. Drucksensor, umfassend eine Baugruppe nach einem der vorhergehenden Ansprüche,
wobei der erste Keramikkörper einen Membrankörper einer Messmembran des Drucksensors bildet,
wobei der zweite Keramikkörper einen Gegenkörper des Drucksensors bildet, und
wobei der Gegenkörper und der Messmembran mittels der Fügestelle, welche ringförmig ausgebildet ist, druckdicht miteinander gefügt sind.

13. Drucksensor nach Anspruch 12, wobei der Drucksensor einen kapazitiven Wandler umfasst,
wobei eine Oberfläche des Gegenkörpers, die der Messmembran zugewandt ist, und/oder die Oberfläche der Messmembran, die dem Gegenkörper zugewandt ist, eine metallische Elektrode aufweist, und
wobei die Elektrode ein Metall aufweist, welches in der Komposition C_{R} im Vergleich zur Komposition C_{H} angereichert ist.

14. Drucksensor nach Anspruch 13, wobei das Metall, welches die Elektrode aufweist bzw. die Elektroden aufweisen, Nickel umfasst.

15. Verfahren zum Herstellen einer Baugruppe, insbesondere nach einem der vorhergehenden Ansprüche, welche Baugruppe einen ersten Keramikkörper (1) und einen zweiten Keramikkörper (2), wobei der erste Keramikkörper (1) und der zweite Keramikkörper (2) mittels eines Aktivhartlots (5) zu verbinden sind,
wobei das Verfahren die folgenden Schritte umfasst:
Bereitstellen des Aktivhartlots und eines Lotstopps zwischen den Keramikkörpern, wobei das Aktivhartlot gemittelt über ein zusammenhängendes Hauptvolumen, das mindestens 50%, insbesondere mindestens 70% und bevorzugt mindestens 90° des Volumens des Aktivhartlots umfasst, eine mittlere Komposition C_{H0} mit einer Liquidustemperatur Tₗ(C_{H0}) aufweist, wobei C_{H0} := (c_{H01}, ... ,c_{H0N}), wobei |C_{H0}| = 1, und wobei die c_{Hi} der stöchiometrische Anteil der Komponenten Kᵢi = 1, ..., N der mittleren Komposition des Aktivhartlots im Hauptvolumen ist, und
Erhitzen der Keramikkörper des Aktivhartlots und des Lotstopps in einem Vakuumlötprozess, zumindest bis zum Schmelzen der Komposition C_{H}, wobei die Schmelze sich im Randbereich des Aktivhartlots mit dem Material des Lotstopps vermischt, wodurch die Schmelze im Randbereich isotherm erstarrt oder höherviskos wird und stoppt, **dadurch gekennzeichnet, dass** der Lotstopp mindestens ein Material aufweist, dessen Liquidustemperatur oberhalb der Liquidustemperatur der Komposition C_{H} des Hauptvolumens liegt, und wobei eine Mischung des Materials des Lotstopps mit der Komposition C_{H} zumindest im Randbereich einer durch das Verfahren zu bildenden Fügestelle zur Bildung einer mittlere Komposition C_{R} führt, wobei die Komposition C_{R} mit eine Liquidustemperatur Tₗ(C_{R}) aufweist, die nicht weniger als 20 K, vorzugsweise nicht weniger als 50 K, und besonders bevorzugt nicht weniger als 100 K über der Liquidustemperatur Tₗ(C_{H0}) der mittleren Komposition C_{H0} des Hauptvolumens liegt, wobei C_{R} := (c_{R1}, ... ,c_{RN}), wobei |C_{R}| = 1, und wobei die c_{Ri} der stöchiometrische Anteil der Komponenten Kᵢi = 1, ..., N der mittleren Komposition des Aktivhartlots im Randbereich ist.

16. Verfahren nach Anspruch 15, wobei der Lotstopp bereitgestellt, indem ein Metall oder eine Mischung verschiedener Metalle auf mindestens einem Oberflächenabschnitt mindestens eines Keramikkörpers abgeschieden werden, wobei eine Anreicherung des Metalls oder der Mischung von Metallen im Aktivhartlot zu einer erhöhten Liquidustemperatur gegenüber der Liquidustemperatur der Komposition des Hauptvolumens des Aktivhartlots führt.

17. Verfahren nach Anspruch 16, wobei der Oberflächenabschnitt des Keramikkörpers, in dem der Lotstopp bereitgestellt wird, nicht mehr als 25%, vorzugsweise nicht mehr als 10% der Kontaktfläche zwischen der Fügestelle und dem Keramikkörper, mit der Kontaktfläche zwischen der Fügestelle und dem Keramikkörper überlappt.

## Claims

1. Assembly, comprising:
a first ceramic body (1) and a second ceramic body (2), wherein the first ceramic body (1) and the second ceramic body (2) are connected via a joint, wherein the joint features an active brazing solder (5),
wherein the active brazing solder, averaged over a continuous primary volume, which comprises at least 50%, particularly at least 70% and preferably at least 80% of the volume of the joint, has an average composition C_{H} with a liquidus temperature Tₗ(C_{H}),
where C_{H} = (C_{H1}, ..., C_{HN}), |C_{H}| being equal to 1 and C_{Hi} representing the stoichiometric part of the components Kᵢi = 1, ..., N of the average composition of the active brazing solder in the main volume,
**characterized in that** a marginal area of the joint, which touches at least one of the ceramic bodies and which does not overlap with the main volume by more than 8% of the main volume, for example by not more 4% and particularly not more than 2% of the main volume, and is preferably situated outside the main volume, has an average composition C_{R} with a liquidus temperature Tₗ(C_{R}) which is not less than 20 K, preferably not less than 50 K and particularly preferably not less than 100 K above the liquidus temperature Tₗ(C_{H}) of the average composition C_{H} of the main volume,
where C_{R} = (C_{R1}, ..., C_{RN}), |C_{R}| being equal to 1 and C_{Ri} representing the stoichiometric part of the components Kᵢi = 1, ..., N of the average composition of the active brazing solder in the marginal area.

2. Assembly as claimed in Claim 1, wherein the marginal area with the average composition C_{R} has a volume that is not less than 0.1%, for example not less 0.5% and particularly not less than 1% of the volume of the joint.

3. Assembly as claimed in Claim 1 or 2, wherein the joint has an annular shape, and wherein the main volume is defined by a rotation body, which is formed by the rotation of a convex polygon, notably a rectangle, around the main axis of rotation of the ring.

4. Assembly as claimed in Claim 3, wherein the marginal area with the composition C_{R} extends along the inner border of the annular joint.

5. Assembly as claimed in one of the previous claims, wherein the liquidus temperature of Tₗ(C_{H}) in relation to the liquidus temperature Tₗ(C_{R}) increases in a monotonic manner with the change in the composition from C_{H} to C_{R}.

6. Assembly as claimed in one of the previous claims, wherein the composition C_{H} has a liquidus temperature Tₗ(C_{H}) which is not more than 300 K, preferably not more than 150 K and particularly preferably not more than 50 K above the liquidus temperature Tₗ(Cₑ) of the eutectic point or the next point of intersection with a eutectic channel with a composition Cₑ in the composition zone,
where Cₑ := (Cₑ₁, ..., C_{eN}), |Cₑ| being equal to 1 and cₑᵢ representing the stoichiometric part of the components Kᵢi = 1, ..., N at the eutectic point or a next point of intersection with a eutectic channel.

7. Assembly as claimed in one of the previous claims, wherein the alloy of the joint at the eutectic point or at the next point of intersection with a eutectic channel has a composition Cₑ in the composition zone,
where Cₑ := (Cₑᵢ, ..., C_{eN}), |Cₑ| being equal to 1 and cₑᵢ representing the stoichiometric part of the components Kᵢi = 1, ..., N at the eutectic point or at the next point of intersection with a eutectic channel,
wherein the difference between the composition Cₑ and the composition C_{H} can be described with a normalized differential vector D_{eH},
wherein it is established that: Cₑ = C_{H} + a_{eH} * D_{eH}, with |D_{eH}| = 1,
wherein the difference between the composition C_{R} and the composition C_{H} can be described with a normalized differential vector D_{RH},
wherein it is established that: C_{R} = C_{H} + a_{RH} * D_{RH}, with |D_{RH}| = 1,
wherein a_{eH} and a_{RH} are positive scalars,
wherein for the scalar product s_{eR} = D_{eH} D_{RH} the following applies:
s_{eR} < 0, particularly s_{eR} < -0.5, preferably s_{eR} < -0.8

8. Assembly as claimed in one of the previous claims, wherein the composition C_{R} of the marginal area contains the same metals as the composition C_{H} of the main volume or other metals.

9. Assembly as claimed in one of the previous claims, wherein the first ceramic body (1) and/or the second ceramic body (2) feature Al₂O₃.

10. Assembly as claimed in one of the previous claims, wherein the active brazing solder features Zr, Ni and Ti.

11. Assembly as claimed in the previous claim wherein the composition C_{H} constitutes 20 to 24 at. % of Ni, 13 to 17 at. % of Ti and up to 100% Zr as the rest, as well as aluminum where applicable, said aluminum diffusing out of the ceramic into the joint through the solder process, wherein the composition C_{H} particularly constitutes 63 at. % of Zr, 22 at. % of Ni and 15 at. % of Ti, wherein there may be diffusion of aluminum, wherein the share of titanium, in particular, is reduced according to the presence of the aluminum and wherein the composition C_{R} in relation to the composition C_{H} has a higher Ni share.

12. Pressure sensor, comprising an assembly as claimed in one of the previous claims,
wherein the first ceramic body forms a membrane body of a measuring membrane of the pressure sensor,
wherein the second ceramic body forms a counter-body of the pressure sensor, and
wherein the counter-body and the measuring membrane are joined in a pressure-tight manner with one another by means of the joint that has an annular design.

13. Pressure sensor as claimed in Claim 12, wherein the pressure sensor has a capacitance transducer,
wherein a surface of the counter-body which faces towards the measuring membrane, and/or the surface of the measuring membrane facing towards the counter-body, has a metal electrode, and
wherein the electrode features a metal which is enriched in the composition C_{R} in relation to the composition C_{H}.

14. Pressure sensor as claimed in Claim 13, wherein the metal, which features the electrode or electrodes, comprises nickel.

15. Procedure designed to create an assembly, particularly according to one of the previous claims, said assembly featuring a first ceramic body (1) and a second ceramic body (2), wherein the first ceramic body (1) and the second ceramic body (2) are to be joined by an active brazing solder (5),
wherein said procedure comprises the following steps:
Provision of the active brazing solder and a solder resist between the ceramic bodies, wherein the active brazing solder, averaged over a continuous main volume which comprises at least 50 %, particularly at least 70% and preferably at least 90% of the volume of the active brazing solder, has an average composition C_{H0} with a liquidus temperature Tₗ(C_{H0}), where C_{H0} := (C_{H01}, ..., C_{H0N}), |C_{H0}| being equal to 1 and C_{Hi} representing the stoichiometric part of the components Kᵢ i = 1, ..., N of the average composition of the active brazing solder in the main volume, and
Heating of the ceramic body of the active brazing solder and the solder resist in a vacuum solder process at least until the composition C_{H} melts, wherein the molten mass mixes with the material of the solder resist in the marginal area of the active brazing solder, as a result of which the molten mass in the marginal area solidifies in an isothermal manner or becomes more viscous and stops,
**characterized in that** the solder resist features at least one material whose liquidus temperature is higher than the liquidus temperature of the composition C_{H} of the main volume, and wherein mixing of the material of the solder resist with the composition C_{H} at least in the marginal area of a joint to be formed by the process results in the formation of an average composition C_{R}, wherein the composition C_{R} has a liquidus temperature Tₗ(C_{R}) that is not less than 20 K, preferably not less than 50 K and particularly preferably not less than 100 K above the liquidus temperature Tₗ(C_{H0}) of the average composition C_{H0} of the main volume, wherein C_{R}: = (C_{R1}, ..., C_{RN}), |C_{R}| being equal to 1 and C_{Ri} representing the stoichiometric part of the components Kᵢi = 1, ..., N of the average composition of the active brazing solder in the marginal area.

16. Procedure as claimed in Claim 15, wherein the solder resist is provided in that a metal or a mixture of different metals is deposited on at least one surface section of at least one ceramic body, wherein an enrichment of the metal or the metal mixture in the active brazing solder results in a higher liquidus temperature in relation to the liquidus temperature of the composition of the main volume of the active brazing solder.

17. Procedure as claimed in Claim 16, wherein the surface section of the ceramic body in which the solder resist is provided does not overlap more than 25%, preferably not more than 10% of the contact surface between the joint and the ceramic body, with the contact surface between the joint and the ceramic body.

## Revendications

1. Ensemble, comprenant :
un premier corps en céramique (1) et un deuxième corps en céramique (2), le premier corps en céramique (1) et le deuxième corps en céramique (2) étant reliés au moyen d'un joint, le joint comprenant un métal d'apport de brasage fort (5),
pour lequel le métal d'apport de brasage fort, moyenné sur un volume principal cohérent, qui comprend au moins 50 %, notamment au moins 70 % et de préférence au moins 80 % du volume du joint, présente une composition moyenne C_{H} avec une température de liquidus Tₗ(C_{H}),
avec C_{H} = (C_{H1}, ..., C_{HN}), |C_{H}| étant égal à 1 et C_{Hi} représentant la part stoechiométrique des composants Kᵢi = 1, ..., N de la composition moyenne du métal d'apport de brasage fort au sein du volume principal,
**caractérisé en ce qu'**une zone marginale du joint, qui touche au moins un des corps en céramique et qui avec le volume principal ne chevauche pas de plus 8 % du volume principal, par exemple pas plus de 4 % et notamment pas plus de 2 % du volume principal et, de préférence, se situe à l'extérieur du volume principal, présente une composition moyenne C_{R} avec une température de liquidus Tₗ(C_{R}) qui est supérieure d'au moins 20 K, de préférence d'au moins 50 K et particulièrement de préférence d'au moins 100 K à la température de liquidus Tₗ(C_{H}) de la composition moyenne C_{H} du volume principal,
avec C_{R} = (C_{R1}, .... C_{RN}), |C_{R}| étant égal à 1 et C_{Ri} représentant la part stoechiométrique des composants Kᵢ i = 1, ..., N de la composition moyenne du métal d'apport de brasage fort dans la zone marginale.

2. Ensemble selon la revendication 1, pour lequel la zone marginale de composition moyenne C_{R} présente un volume, qui n'est pas inférieur à 0,1 %, par exemple pas inférieur à 0,5 % et notamment pas inférieur à 1 % du volume du joint.

3. Ensemble selon la revendication 1 ou 2, pour lequel le joint est de forme annulaire, et pour lequel le volume principal est défini par un corps de rotation qui est formé par un polygone convexe, notamment un rectangle, autour de l'axe de rotation principal de l'anneau.

4. Ensemble selon la revendication 3, pour lequel la zone marginale de composition C_{R} s'étend le long du bord intérieur du joint annulaire.

5. Ensemble selon l'une des revendications précédentes, pour lequel la température de liquidus croît de façon monotone de Tₗ(C_{H}) vers la température de liquidus Tₗ(C_{R}) avec la modification de la composition de C_{H} en C_{R}.

6. Ensemble selon l'une des revendications précédentes, pour lequel la composition C_{H} présente une température de liquidus Tₗ(C_{H}) qui n'est pas supérieure de 300 K, de préférence pas supérieure de 150 K et particulièrement de préférence pas supérieure de 50 K à la température de liquidus Tₗ(Cₑ) du point eutectique ou du prochain point d'intersection avec un canal eutectique de composition Cₑ au sein de la zone de composition,
avec Cₑ = (Cₑ₁, ..., C_{eN}), |Cₑ| étant égal à 1 et Cₑᵢ représentant la part stoechiométrique des composants Kᵢ i = 1, ..., N au point eutectique ou à un prochain point d'intersection avec un canal eutectique.

7. Ensemble selon l'une des revendications précédentes, pour lequel l'alliage du joint au point eutectique ou au prochain point d'intersection avec un canal eutectique présente une composition Ce dans la zone de composition,
avec Cₑ = (Cₑᵢ, ..., C_{eN}), |Cₑ| étant égal à 1 et Cₑᵢ représentant la part stoechiométrique des composants Kᵢ i = 1, ..., N au point eutectique ou au prochain point d'intersection avec un canal eutectique,
pour lequel la différence entre la composition Cₑ et la composition C_{H} peut être décrite avec un vecteur de différence D_{eH} normalisé,
étant établi que : Cₑ = C_{H} + a_{eH} * D_{eH}, avec |D_{eH}| = 1,
pour lequel la différence entre la composition C_{R} et la composition C_{H} peut être décrite avec un vecteur de différence D_{RH} normalisé,
étant établi que : C_{R} = C_{H} + a_{RH} * D_{RH}, avec |D_{RH}| = 1,
a_{eH} et a_{RH} étant des scalaires positifs,
la relation s_{eR} = D_{eH} D_{RH} étant établie pour le produit scalaire,
avec s_{eR} < 0, notamment s_{eR} < -0,5, de préférence s_{eR} < -0,8

8. Ensemble selon l'une des revendications précédentes, pour lequel la composition C_{R} de la zone marginale contient les même métaux que la composition C_{H} du volume principal, ou d'autres métaux.

9. Ensemble selon l'une des revendications précédentes, pour lequel le premier corps en céramique (1) et/ou le deuxième corps en céramique (2) comportent de l'Al₂O₃.

10. Ensemble selon l'une des revendications précédentes, pour lequel le métal d'apport de brasage fort contient du Zr, du Ni et du Ti.

11. Ensemble selon l'une des revendications précédentes, pour lequel la composition C_{H} est constituée de 20 à 24 % at de Ni, de 13 à 17 % at de Ti et le reste jusqu'à 100 % de Zr, ainsi qu'éventuellement de l'aluminium, lequel est diffusé par le procédé de brasage de la céramique dans le joint, pour lequel la composition C_{H} est constituée notamment de 63 % at de Zr, de 22 % at de Ni et du 15 % at de Ti, de l'aluminium est éventuellement diffusé à l'intérieur, la teneur en titane étant notamment réduite selon la présence d'aluminium et la composition C_{R} présentant par rapport à la composition C_{H} une teneur accrue en Ni.

12. Capteur de pression, comprenant un ensemble selon l'une des revendications précédentes,
pour lequel le premier corps en céramique forme un corps d'une membrane de mesure du capteur de pression,
pour lequel le deuxième corps en céramique forme un contre-corps du capteur de pression, et
pour lequel le contre-corps et la membrane de mesure sont assemblés de façon étanche à la pression au moyen du joint, lequel est de forme annulaire.

13. Capteur de pression selon la revendication 12, pour lequel le capteur de pression comprend un transducteur capacitif,
pour lequel une surface du contre-corps, qui fait face à la membrane de mesure, et/ou la surface de la membrane de mesure, qui fait face au contre-corps, comportent une électrode métallique, et
pour lequel l'électrode présente un métal, lequel est enrichi dans la composition C_{R} par rapport à la composition C_{H}.

14. Capteur de pression selon la revendication 13, pour lequel le métal, qui comporte l'électrode ou les électrodes, comprend du nickel.

15. Procédé destiné à la fabrication d'un ensemble, notamment selon l'une des revendications précédentes, lequel ensemble comprend un premier corps en céramique (1) et un deuxième corps en céramique (2), le premier corps en céramique (1) et le deuxième corps en céramique (2) étant reliés entre eux au moyen d'un métal d'apport de brasage fort (5),
lequel procédé comprend les étape suivantes :
Mise à disposition du métal d'apport de brasage fort et d'une épargne de brasage entre les corps en céramique, le métal d'apport de brasage fort, moyenné sur un volume principal cohérent, qui comprend au moins 50 %, notamment au moins 70 % et de préférence au moins 90 % du volume de métal d'apport de brasage fort, présentant une composition C_{H0} moyenne avec une température de liquidus Tₗ(C_{H0}), avec C_{H0} = (C_{H01}, ..., C_{H0N}), |C_{H0}| étant égal à 1 et C_{Hi} représentant la part stoechiométrique des composants Kᵢi = 1, ..., N de la composition moyenne du métal d'apport de brasage fort au sein du volume principal, et
Échauffement des corps en céramique, du métal d'apport de brasage fort et de l'épargne de brasage dans un process de brasage sous vide jusqu'à l'entrée en fusion de la composition C_{H}, la masse fondue se mélangeant dans la zone marginale avec la matière de l'épargne de brasage, ce par quoi la masse fondue se solidifie de manière isotherme dans la zone marginale, ou devient plus visqueuse,
**caractérisé en ce que** l'épargne de brasage comporte au minimum une matière, dont la température de liquidus est supérieure à la température de liquidus de la composition C_{H} du volume principal, et un mélange de la matière de l'épargne de brasure de composition C_{H} entraînant, au moins dans la zone marginale d'un joint formé par le procédé, la formation d'une composition moyenne C_{R}, la composition C_{R} présentant une température de liquidus Tₗ(C_{R}) supérieure d'au moins 20 K, de préférence d'au moins 50 K et particulièrement de préférence d'au moins 100 K à la température de liquidus Tₗ(C_{H0}) de la composition moyenne C_{H0} du volume principal, avec C_{R} = (C_{R1}, ..., C_{RN}), |C_{R}| étant égal à 1 et C_{Ri} représentant la part stoechiométrique des composants Kᵢi = 1, ..., N de la composition moyenne du métal d'apport de brasage fort dans la zone marginale.

16. Procédé selon la revendication 15, pour lequel l'épargne de brasage est mis à disposition en ce qu'un métal ou un mélange de différents métaux est déposé sur une partie de la surface d'au moins un corps en céramique, un enrichissement du métal ou du mélange de métaux dans le métal d'apport de brasage fort entraînant une température de liquidus accrue par rapport à la température de liquidus de la composition du volume principal du métal d'apport de brasage fort.

17. Procédé selon la revendication 16, pour lequel la partie de la surface du corps en céramique, dans laquelle l'épargne de brasage est mis à disposition, ne chevauche pas plus de 25 %, de préférence pas plus de 10 % de la surface de contact entre le joint et le corps en céramique, avec la surface de contact entre le joint et le corps en céramique.
